# EUROPEAN PATENT APPLICATION

(11) **EP 0 821 521 A2**
(43) Date of publication of application: **28.01.1998**
(21) Application number: 97302834.3
(22) Date of filing: 24.04.1997
(51) Int. Cl.: H04N 5/14

(54) **Method and apparatus for improving a video signal**

(30) Priority: 25.07.1996 US 686387
(71) Applicant: Rave Engineering, San Diego, California 92129 (US)
(72) Inventor: Burnworth, Randy J., San Diego, CA 92128 (US); Pires, George H., Hampton, NJ 08827 (US)
(74) Representative: Hackney, Nigel John

(57) **Abstract**

An improvement or enhancing signal is formed and added to the luminance signal for increasing the sharpness of luminance signal transitions. An RC differentiator (32) forms a differential signal having a differential pulse derived from the luminance transition. The tail end of the differential pulse is terminated to produce an improvement signal pulse having a tail that does not extend beyond the transition. A transitor (40) discharges the capacitor of the differentiator at a discharging rate that is faster than the rate of charging and sooner than would otherwise occur. An inverse of the differential signal is applied to the base of the transistor and the differential signal is applied to the emitter. The base-emitter junction voltage of the transistor determines when the capacitor discharge occurs. The resulting signal is scaled and low-pass filtered before being added to the luminance signal.

## Description

The present invention is related to a circuit and method for improving or enhancing a video signal, and in particular to such methods and circuits in which image edges are sharpened by reshaping luminance transitions in the video signal.

A video signal has a luminance component (referred to as the luminance signal) and a chrominance component (also known as the chrominance signal). The luminance signal is a signal that carries information about the overall light intensity level ("brightness" or "darkness") and sync signals, while the chrominance signal carries information about the color. As the overall light intensity level changes from one image location to a neighboring one, such as at the edge of a bright image against a gray background, luminance signal transitions are correspondingly observed in the waveform of the luminance signal. These transitions are degraded by the video camera circuits or in processing and transmission of the luminance signal. The result is a slower transition that gives the image, when viewed on a screen or monitor, a blurry or out-of-focus appearance. This degradation is compensated for by increasing the rate of transition, to make the resultant image appear sharper.

In order to process transitions in the luminance signal, the luminance signal is first isolated by separating the chrominance signal from the luminance signal. Then the luminance signal is improved or enhanced by processing, while maintaining a synchronous timing with the chrominance signal. Then the chrominance and luminance signals are added back together to reconstruct the composite video signal. As used herein the terms improve and enhance are synonymous.

Improving the luminance signal is performed by generating and subsequently using an improvement signal. A desirable improvement signal produces an improved luminance transition having shorter rise and fall times. The improvement signal can be used to improve the luminance signal in a number of ways. In U.S. Patent No. 4,758,891, Hitchcock et al. disclose substituting an improvement signal for the luminance signal during the transitions, by switching to an altogether different terminal carrying the improvement signal. Thus, the improved luminance signal is formed of only the improvement signal during the transitions. Switching between different terminals may produce undesirable switching transients, which will result in high frequencies in the eventual image.

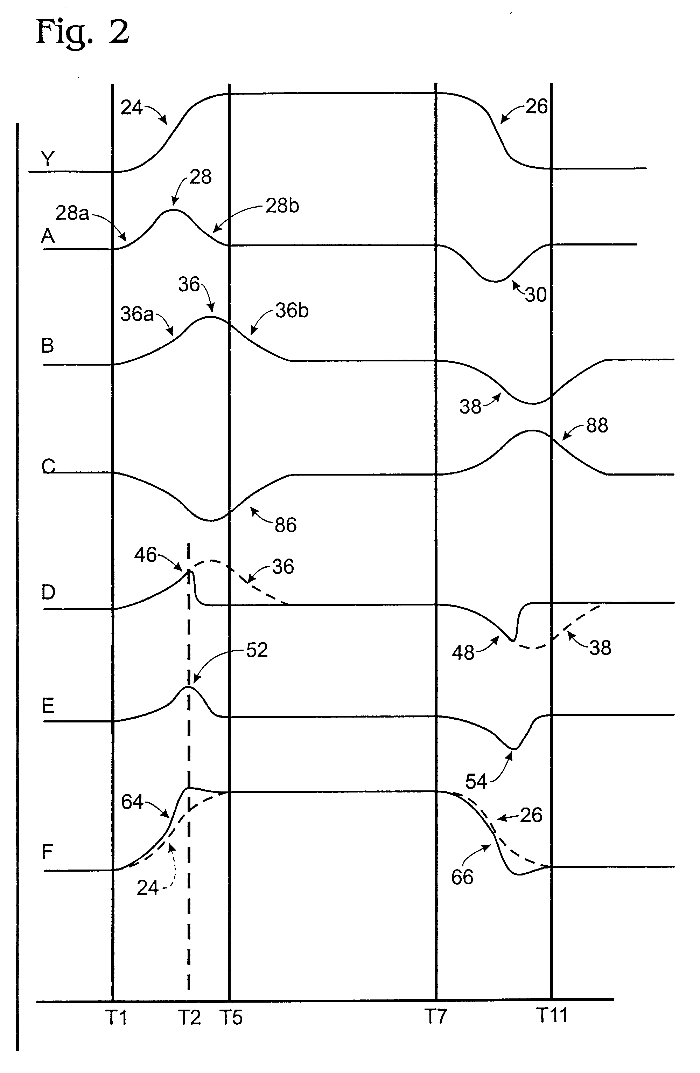

The problems of such signal substitution methods can be avoided by simply adding an appropriate improvement signal to the luminance signal. An improvement signal intended for addition preferably lasts only while the transition lasts. Some conventional techniques exist for generating an improvement signal using a differential signal, that has a waveform representative of a first or second time derivative of the luminance signal. As shown in Fig. 2 of Hitchcock, a differential signal with an exact first time derivative waveform exhibits a positive derivative pulse as a result of a dark-to-bright transition, a negative derivative pulse for a bright-to-dark transition, and a zero value when there are no transitions. These pulses can be used as transition-correcting pulses. Accordingly, a differential signal can be used advantageously as the improvement signal. Various techniques are also used to modify time derivative signals, such as using compensating time delays for coordinating the timing of various signals used to reconstruct the transitions in the luminance signal.

A differential signal can be generated by a differentiator circuit. However, the differential pulses of such differential signals exhibit some differences from an exact derivative. One such difference is that the differential pulse has a "tail" that slowly returns to zero after the luminance transition has ended. If such a differential pulse were to be used in an improvement scheme involving addition, the tail would be added to the flat portion of the luminance signal, which occurs after the luminance signal transition has ended. Thus, the tail would produce an overshoot after the end of dark-to-bright transitions, and an undershoot after the end of bright-to-dark transitions. These undershoots and overshoots result in undesirable effects in the eventual image, particularly where they are pronounced. For example, an undershoot appears as a darker stripe on the follow side of an edge of a bright image.

Some techniques exist for dealing with the undershoots and overshoots. Such techniques include scaling and clipping the correcting pulses of an improvement signal. Scaling is a uniform change in the amplitude of the correcting pulse, but can only work when the initial profile of the pulse is suitable in the first place. Clipping or paring is limiting the amplitude of the correcting pulse, and produces abrupt changes in signal level, represented by high frequencies in the signal and which appear as noise in the eventual image.

It is desirable to improve the luminance signal of video signals in ways that overcome these problems.

Preferably, the present invention overcomes these problems and limitations of the prior art in improving a luminance signal that contains a transition between different levels. Generally, the present invention provides a simple circuit and method for producing an improvement signal derived from a first derivative of the luminance signal and having a single improvement pulse for each luminance signal transition. When the improvement pulse is added to the luminance signal, the sharpness of the transition is improved. A circuit made according to the invention produces an improvement pulse having a duration less than the duration of the differential pulse.

According to the preferred embodiment of the invention an RC differentiator is used to generate a differential signal. In one aspect of the invention, the differential pulses are shortened by discharging a differentiating capacitor at a discharging rate that is faster than the rate of charging as determined by the differentiator. It is also preferred to discharge the capacitor when the amplitude of the differential pulse reaches a given value.

The capacitor is preferably discharged through a transistor. An inverse signal representative of a negative of the differential signal is applied to the base of the transistor and the differential signal is applied to the emitter. The capacitor is discharged when the sum of the amplitudes of the differential pulse and the inverse pulse reaches a second given threshold value that turns the transistor on. The base-emitter junction voltage of a transistor is thus used as a threshold mechanism. The resulting pulse is preferably scaled and then low-pass filtered to remove high frequencies, before being added to the luminance signal.

It is seen that such a method and apparatus is simple compared to more complex systems, while providing substantial improvement in the video image. These and other advantages and features of the present invention will be more appreciated and better understood by considering the following drawings as described in the detailed description of the invention.

FIG. 1 is a block diagram of a basic circuit made according to the invention.

FIG. 2 illustrates representative waveforms of signals relating to the circuit of FIG. 1.

FIG. 3 shows details of waveforms of FIG. 2.

FIG. 4 shows a low level implementation of a portion of the basic circuit of FIG. 1.

### DETAILED DESCRIPTION OF THE PREFERRED EMBODIMENT

As has been described, the present invention provides a method and apparatus for improving the transitions in the luminance signal of a video signal that correspond to image edges. Improvement, as used herein, refers to increasing the sharpness of the luminance signal transitions and providing controlled overshoot of the transitions. This is accomplished according to the present invention by generating an improvement signal and then adding it to the luminance signal.

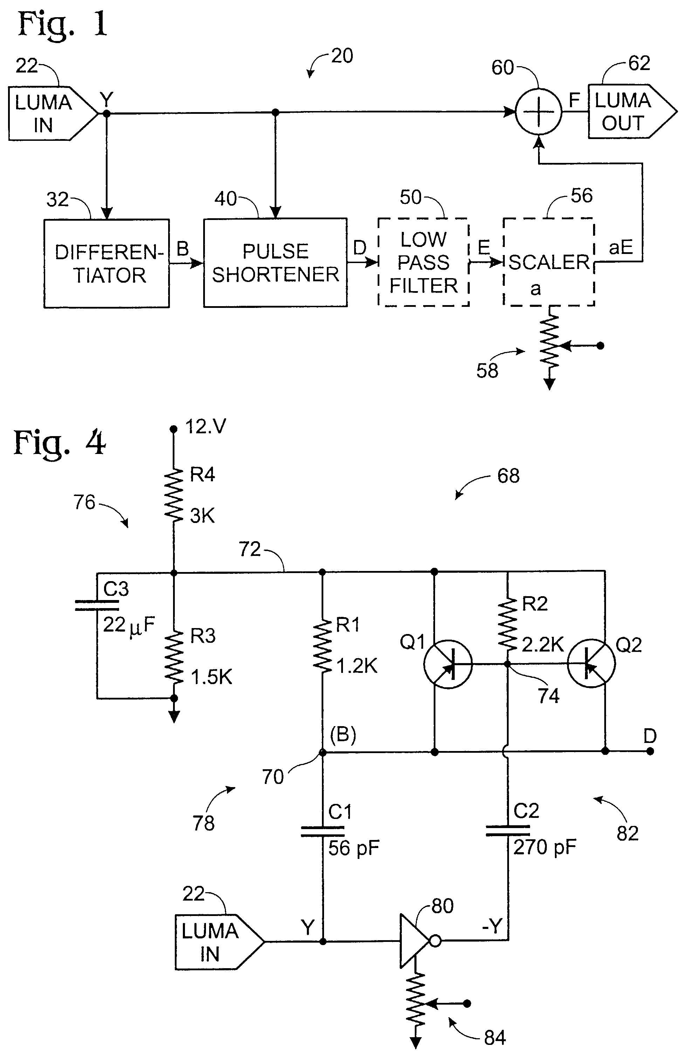

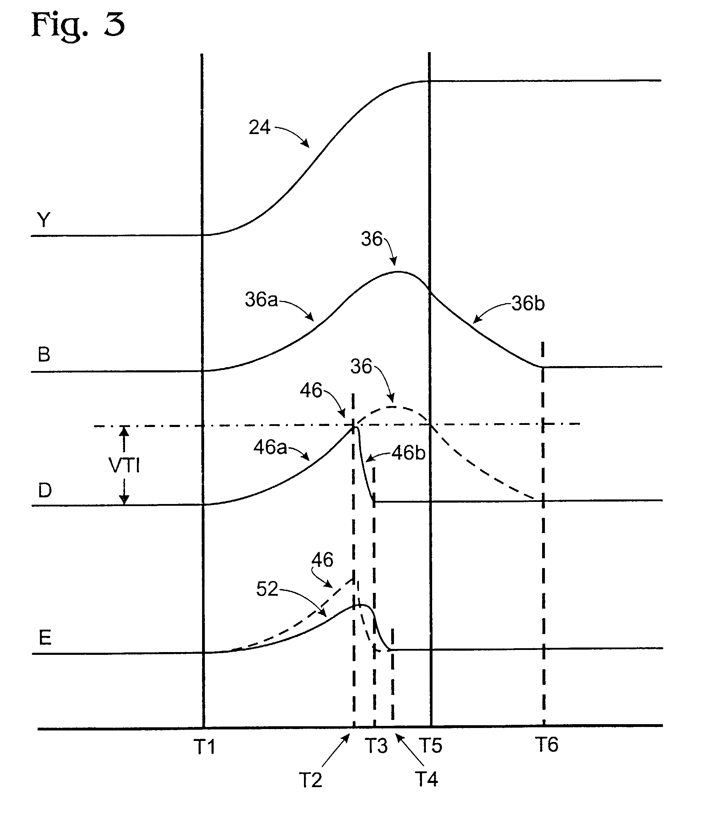

A basic circuit made according to the present invention and for practicing the method of the invention is now described in connection with FIGS. 1, 2 and 3. A high level circuit 20 is shown in FIG. 1. The waveforms of signals identified in FIG. 1 are illustrated in FIGS. 2 and 3.

High level circuit 20 has an input node 22 that receives the luminance signal (also known as "luma"). The luminance signal is represented by waveform Y in FIG. 2. Waveform Y has two exemplary luminance signal transitions, a dark-to-bright luminance signal transition 24 occurring early, between times T1 and T5, and a bright-to-dark transition 26 occurring later, between times T7 and T11. The two transitions 24 and 26 are shown as exactly symmetric solely for illustration purposes.

In Figure 2, waveform A corresponds to an exact first derivative of the waveform Y, and is included only for purposes of illustration. A positive pulse 28 appears between times T1 and T5, in response to the corresponding positive going transition 24 in the luminance signal Y. A negative pulse 30 appears between times T7 and T11, corresponding to the negative going transition 26. The derivative waveform A has zero values everywhere else, since there are no other transitions.

Each derivative pulse begins when the associated luminance signal transition starts, such as at time T1 for the positive pulse 28. Each derivative pulse also ends when the luminance signal transition ends, such as at time T5 for pulse 28. The beginning of the derivative pulse 28 is shown at 28a and the ending is shown at 28b.

As seen in FIG. 1, circuit 20 includes a differentiator 32, also referred to as means for forming a differential signal. The differentiator 32 produces a differential signal in response to the luminance signal Y. The differential signal, shown as waveform B in FIG. 2, includes a positive pulse 36 derived from the positive going transition 24, and a negative pulse 38 in response to the negative going transition 26. The differential signal has the value of zero everywhere else.

It can be seen that the differential pulses 36, 38 are not identical to the derivative pulses 28, 30. A differential pulse differs from its corresponding first derivative pulse in two main aspects. First the beginning of the differential pulse appears as a somewhat delayed version of the first derivative pulse, thus reaching a maximum somewhat later than the derivative pulse does. Second, the differential pulse has an additional tail, continuing after the end of the transition. The delay and tail aspects are not a result of the mathematical process of differentiation, but a result of the differentiator 32 itself reacting too slowly to follow a quick transition in the luminance level.

A number of differentiating circuits are known in the art. A preferred differentiator circuit for producing a first derivative based differential signal is a combination of a capacitor in series with a resistor. This circuit is also known as a capacitor-resistor differentiator, or an RC differentiator for short. The capacitor and the resistor together define a first time constant. The capacitor charges and discharges through the resistor at a first rate, determined by the first time constant. The resulting signal has a waveform similar to what is shown in waveform B of FIG. 2. The exact duration and amount of delay and tail of each differential pulse are determined by the first time constant, as well as the size of the transition in the luminance signal Y that generated the differential pulse. The discrepancies of the differential pulse from an exact derivative pulse are somewhat smaller, if the first time constant is relatively small. However, the differential signal will have a low signal strength, which will result in a lower signal to noise ratio. Conversely, an RC differentiator with a larger time constant will result in a differential output signal with good signal to noise ratio. However, there is a more pronounced difference between its waveform (e.g. B) and the profile of a true first derivative (e.g. A).

FIG. 3 shows selected waveforms of FIG. 2 enlarged to show more detail. Each differential pulse has a leading edge and a tail. As seen in both FIG. 2 and FIG. 3, differential pulse 36 has a main portion 36a and a tail 36b immediately following the leading feature 36b. The main portion 36a is coincident with transition 24, and lasts between times T1 and T5. The main portion is created as the differentiator 32 differentiates, with some delay, the varying luminance signal Y. At time T5, the luminance signal Y stops changing. Accordingly, the derivative pulse 28 has returned to zero. Due to the delay of the differentiator 32, however, the value of the differential pulse 36 has not yet returned to zero at that time. In an RC differentiator, the capacitor has not fully discharged yet. The tail 36b is the result of a decay from the value of the differential pulse at time T5, down to zero. Accordingly, the tail 36b starts at time T5, and ends at time T6.

Because of the delay aspect, the profile of the main portion 36a is even more suitable for creating an improvement pulse than is the derivative pulse 28 itself. However, the tail 36b is clearly undesirable for addition to the luminance signal, as it would produce an overshoot.

Accordingly, the high level circuit 20 additionally includes a pulse shortener 40, also referred to as means for shortening the differential pulse or shortening means. The pulse shortener 40 is responsive to the luminance signal for producing an improvement pulse with a duration shorter than the duration of the differential signal.

When the pulse shortener 40 shortens the differential pulse 36, an improvement signal is produced, shown as waveform D in FIGS. 2 and 3. Waveform D includes improvement pulses 46 and 48, corresponding respectively to differential pulses 36 and 38. Each improvement pulse begins coincidentally with its corresponding differential pulse, and ends before the ending of the corresponding differential pulse. Accordingly, the improvement signal is similar to the differential signal, except the pulses are shorter in duration.

The improvement pulse 46 has a leading edge 46a, lasting between times T1 and T2, which corresponds to a portion of the leading edge of the differential pulse 36. The improvement pulse 46 also has a trailing edge 46b, lasting between times T2 and T3. According to the invention, time T3 occurs before time T6. Further, time T3 is also shown as occurring before time T5, which is not necessary but preferred.

The resulting improvement signal, represented by waveform D, may be added to the luminance signal. However, it is found that some further processing is desirable. Pulses 46, 48 include a sharp point at the top produced by high frequencies in the signal. Frequencies over 3 MHZ tend to interfere with the chrominance signal subcarriers.

Accordingly, high level circuit 20 also preferably includes a low pass filter 50, referred to as means for filtering out frequencies of the improvement pulse that are above a given frequency. As a result of filtering the improvement signal D, there is produced a filtered signal having waveform E and including filtered pulses 52, 54 having rounded shapes. The filtered pulses end a little later than pulses 46, 48. For example, filtered pulse 52 ends at time T4, which is a little later than time T3. Further, time T4 is shown as occurring not later than T5, which is preferred but not necessary.

The low pass filter 50 thus is seen to reduce the bandwidth of the improvement signal and correspondingly reduces the amplitudes of the pulses. Circuit 20, thus, preferably also includes an adjustable multiplier 56, also referred to as means for scaling the improvement pulse. Scaler 56 multiplies the value of the improvement pulse by an adjustable factor a. As represented by potentiometer 58, the user preferably adjusts the level a of the scaler, to adjust the level of improvement to the luminance signal to provide a selected change in the final image.

Circuit 20 includes an adder circuit 60, also referred to as means for adding the improvement signal to the luminance signal. Adder circuit 60 adds the improvement signal to the luminance signal present on node 22, to produce an improved luminance signal on output node 62. The improved luminance signal is represented by waveform F in FIG. 2. Note that waveform F exhibits transitions 64, 66 that are sharper than the corresponding transitions 24, 26 of waveform Y, represented by the dashed lines in waveform F.

In the present invention, it is preferred that the differentiator 32 be implemented by an RC differentiator, as described above. It is further preferred that the pulse shortener 40 discharge the capacitor at a discharging rate that is faster than the first rate, i.e., the rate of discharge of the capacitor when functioning only as a differentiator. Such a discharge of the capacitor eliminates the tail 36b of the differential pulse 36, thus shortening the differential pulse 36. A person having reasonable skill in the art will discern numerous ways to implement a pulse shortener for discharging the capacitor, in view of the present description. Such ways include but are not limited to shorting the capacitor through an additional small resistance in parallel with the capacitor, as controlled by a semiconductor device, such as a transistor.

According to the preferred embodiment of the invention yet to be described with reference to FIG. 4, the pulse shortener 40 is responsive to the differential signal, for starting the discharging when the amplitude of the differential pulse reaches a predetermined threshold value VT1 (also known as a first given value). As can be seen in waveform D of FIG. 3, the amplitude of the differential pulse 36 reaches a voltage threshold VT1 at time T2. The threshold level VT1 is preferably adjustable. Adjusting the threshold level VT1 will also adjust time T2, for a given transition. As will be understood by a person skilled in the art, an embodiment that discharges the capacitor when the amplitude of a differential pulse reaches a threshold value will not always produce a shortened improvement pulse. Indeed, very slow luminance signal transitions will produce a differential pulse with an amplitude that does not reach the threshold. The differential pulse then becomes the improvement pulse. That is as it should be; very slow transitions benefit by the addition of unlimited differential pulses.

At time T2, then, the capacitor is discharged at a discharging rate that is faster than the first rate, thus creating the improvement signal D which includes the improvement pulse 46. The improvement pulse leading edge 46a, is actually a portion of the main portion 36a of the differential pulse 36. The improvement pulse trailing edge 46b, decays according to the discharging rate. It is preferred that the discharging rate be faster than the first rate, so that it is shorter than tail 36b. The faster the discharging rate, the sooner time T3 will occur after time T2.

Reference is now made to FIG. 4 which illustrates a circuit 68. Circuit 68 is a preferred embodiment for implementing the RC differentiator 32 and the pulse shortener 40 of the high level circuit 20 of FIG. 1. Circuit 68 functions according to the method of the invention. Components in FIG. 4 with like names and numbers as those of FIG. 1 are similar, and operate in the same way.

Circuit 68 is connected to input node 22 for receiving luminance signal Y. It also has a main node 70, an intermediate node 72, and an auxiliary node 74. As is seen, these nodes are separated by various circuit components, which are now described.

Circuit 68 has a dc voltage source 76, implemented by a resistive bridge formed by resistors R3 and R4. Resistors R3 and R4 connect at intermediate node 72, as shown, forming a reference voltage, which in this case is 4 volts based on a common power supply voltage of 12 volts applied to resistor R4. The intermediate node 72 is further capacitively connected to electrical ground by a large capacitor C3, in order to prevent the potential at the intermediate node 72 from drifting due to large differential pulses.

Circuit 68 additionally includes a first RC differentiator 78, implemented by the combination of a capacitor C1 and a resistor R1. Differentiator 78 corresponds to differentiator 32 shown in FIG. 1. Capacitor C1 is connected between main node 70 and input node 22. Resistor R1 is connected between main node 70 and intermediate node 72. The values of the components C1, R1 define a first time constant of the RC differentiator 78, as is well known in the art.

The balance of circuit 68 forms pulse-shortener 40 discussed with reference to FIG. 1. An inverter 80 inverts the luminance signal Y received at input node 22. The inverted luminance signal is output to a second RC differentiator 82. The second RC differentiator 82 includes a capacitor C2 and a resistor R2. Capacitor C2 is connected between the inverting terminal of inverter 80 and auxiliary node 74. Resistor R2 is connected between auxiliary node 74 and intermediate node 72. The capacitor C2 and resistor R2 together define a second time constant. It is advantageous that the second time constant be larger than the first time constant, so that differentiator 82 has a relatively fast discharging rate.

The second RC differentiator 82 thus creates an inverse signal C at the auxiliary node 74. As can be seen in waveform C, the inverse signal is a negative of the differential signal B, and includes, in this example, inverse pulses 86, 88 corresponding to differential pulses 36, 38, respectively. There is no requirement that the inverse signal C be an exact mirror of the differential signal.

Circuit 68 further includes limiting transistors Q1 and Q2, of opposite polarity. Transistors Q1 and Q2 are also referred to as discharge control means. Each limiting transistor has a base connected to auxiliary node 74, an emitter connected to main node 70, and a collector. Optionally and preferably, the collector of each transistor Q1, Q2 is connected to intermediate node 72 for reasons that will be explained below. The polarity of the limiting transistors determines which direction of luminance signal transitions will be controlled by each transistor. Q1, as a pnp transistor, conducts during dark-to-lighter transitions that produce positive differential pulses. Correspondingly, Q2 is an npn transistor and conducts during light-to-darker transitions.

The operation of circuit 68 is now explained with reference to the waveforms shown in FIG. 2. Luminance signal Y, appearing on the input node 22, is differentiated by RC differentiator 78. A differential signal B would appear on main node 70, if nothing else were connected to it. However, since there is an implementation of an pulse shortener attached to the main node 70, the differential signal B appearing on the main node is subject to the action of the pulse shortener.

An inverted luminance signal (-Y) appears at the output of inverter 80. The inverted luminance signal (-Y) is differentiated by RC differentiator 82. An inverse differential signal C appears on the auxiliary node 74, and is thus applied to the bases of transistors Q1 and Q2.

The differential signal and the inverse signal are of opposite polarity, and combine to form the voltage drop across the base-emitter junction of the limiting transistors. In the case of positive transition 24, the base-emitter junction of Q1 conducts when the difference between waveforms B and C reaches the junction threshold voltage (0.7 Volts). In other words, Q1 conducts when the sum of the amplitudes of the differential pulse and the inverse pulse is a second given value. The two signals may be of equal amplitude, so that the threshold is reached when each has reached an absolute value of half of that, namely 0.35 Volts. If the gain of the circuit 80, as represented by rheostat 84, is adjusted further, then the two signals will not have equal amplitude. So, adjusting the gain of the amplifier 80 is an indirect way of adjusting the threshold VT1 that is applied to the differential signal B.

When the base-emitter junction of the appropriate transistor conducts, then the capacitor C1 is discharged by the opposite charge of capacitor C2. In this embodiment, given that the capacitor C1 is discharged by another capacitor of opposite charge, the resulting discharging rate is very fast, as is preferred. Indeed, the trailing edge 46b appears on the oscilloscope as nearly a straight drop down to the reference potential of 4 volts. So, time T3 is almost coincidental with time T2.

The output signal that is used for improving the luminance signal transition is thus formed on main node 70, which signal includes both positive and negative pulses.

Another inventive aspect of the circuit 68 of FIG. 4 is the connection of the collectors of transistors Q1, Q2 to the intermediate node 72. The collector base junction prevents the auxiliary node 74 from going outside the range of 3.3 volts and 4.7 volts, because the collector voltage is maintained at 4 volts. Even more, it prevents C1 from being pulled down below 4 volts (while it is being discharged in a dark-to-bright transition), and from being pulled up above 4 volts (while it is being discharged in a bright-to-dark transition), due to excess signal strength of the inverse signal.

It is thus seen that circuit 68 provides an improvement pulse without the extended tail characteristic of a differential pulse. This results in an improved, crisper looking image with reduced distortion. It will be obvious that the invention is capable of embodiments other than those that have been described herein. In the above description numerous details have been set forth in order to provide a more thorough understanding of the present invention. It will be obvious, however, to one skilled in the art that the present invention may be practiced in other ways. It is useable on any video signals, such as those occurring in one-line imagers found on CAT scanners, photocopiers, scanners, electron beam and other microscopes, ultra-sound units, VCR's, computer monitors, televisions, cable set-top boxes, digital video disc drives, video outputs on CD-ROM drivers, and video and televideo conferencing equipment. In other instances, well known features have been described simply in order to clarify the description of the present invention.

## Claims

1. A circuit for improving the luminance signal of a video signal, the luminance signal containing a transition between different luminance signal levels and having a duration, the circuit comprising means for generating an improvement signal, and means for adding the improvement signal to the luminance signal, the improving-signal generating means being characterized by:
means for forming a differential signal having a waveform representative of a first time derivative of a luminance signal, the differential signal including a differential pulse derived from the transition and having a duration associated with the transition; and
means for shortening the differential pulse, and thereby produce an improvement signal containing an improvement pulse, the improvement pulse having a duration less than the duration of the differential pulse.

2. The circuit of claim 1, wherein the forming means comprises a first resistor in series with a first capacitor that charges and discharges through the first resistor at a first rate, and the shortening means discharges the first capacitor at a discharging rate that is faster than the first rate.

3. The circuit of claim 1, wherein the improvement signal generating means further comprises means for filtering out frequencies of the improvement pulse that are above a given frequency.

4. The circuit of claim 1, wherein the improvement signal generating means further comprises scaling means for scaling the improvement pulse.

5. The circuit of claim 1 wherein the shortening means terminates the differential pulse when the amplitude of the differential pulse reaches a first given value.

6. The circuit of claim 5, wherein the forming means comprises a resistor in series with a capacitor; and the shortening means comprises means for generating an inverse signal representative of the negative of the differential signal, the inverse signal thereby including an inverse pulse representative of a negative of the differential pulse; and discharge control means responsive to the inverse signal for discharging the capacitor when the sum of the amplitude of the differential pulse and the amplitude of the inverse pulse is a second given value.

7. The circuit of claim 6 wherein the inverse signal generating means further comprises scaling means for scaling the inverse pulse.

8. The circuit of claim 6 wherein the discharge control means comprises at least a first transistor means having a control terminal and two current-carrying terminals, with the inverse signal applied to the control terminal and the differential signal applied to a first one of the two current-carrying terminals.

9. The circuit of claim 8 wherein the second one of the two current-carrying terminals is coupled to a reference voltage.

10. The circuit of claim 8 wherein the discharge control means further comprises a second transistor means connected in parallel to the first transistor means and having terminals corresponding to the terminals of the first transistor means connected the same as the terminals of the first transistor means, the first transistor means being an npn transistor and the second transistor means being a pnp transistor.

11. A method of improving the luminance signal of a video signal, the luminance signal containing a transition between different luminance signal levels and having a duration, the method comprising the steps of:
generating an improvement signal by forming a differential signal having a waveform representative of a first time derivative of a luminance signal, the differential signal including a differential pulse derived from the transition and having a duration associated with the transition; and shortening the differential pulse, and thereby producing an improvement signal containing an improvement pulse, the improvement pulse having a duration less than the duration of the differential pulse; and
adding the improvement signal to the luminance signal.

12. The method of claim 11, wherein the step of forming includes the step of changing the charge on a capacitor at a first rate, and the step of shortening includes the step of discharging the first capacitor at a discharging rate that is faster than the first rate.

13. The method of claim 11, wherein the step of generating the improvement signal further comprises the step of filtering out frequencies of the improvement pulse that are above a given frequency.

14. The method of claim 11, wherein the step of generating the improvement signal further comprises the step of scaling the improvement pulse.

15. The method of claim 11, wherein the step of shortening further comprises the step of terminating the differential pulse when the amplitude of the differential pulse reaches a first given value.

16. The method of claim 15, wherein the step of forming includes the step of changing the charge on a capacitor; and the step of shortening comprises the steps of generating an inverse signal representative of the negative of the differential signal, the inverse signal thereby including an inverse pulse representative of a negative of the differential pulse, and discharging the capacitor when the sum of the amplitude of the differential pulse and the amplitude of the inverse pulse is a second given value.

17. The method of claim 16 wherein the step of generating the inverse signal further comprises the step of scaling the inverse pulse.

18. The method of claim 16 wherein the step of discharging includes the steps of applying the inverse signal to the control terminal of a first transistor means having a control terminal and two current-carrying terminals, and applying the differential signal to a first one of the two current-carrying terminals.

19. A circuit for improving the luminance signal of a video signal, the luminance signal containing at least one transition between different luminance signal levels corresponding to an edge of an image, the circuit comprising:
a dc voltage source for producing a reference potential at an intermediate node;
a first differentiator comprising a first resistor coupling the intermediate node to a main node, and a first capacitor coupling a received luminance signal to the main node;
an inverter circuit for inverting the received luminance signal;
a second differentiator comprising a second capacitor coupling the inverted luminance signal to an auxiliary node, and a second resistor coupling the auxiliary node to the intermediate node;
an npn transistor and a pnp transistor, each transistor having a collector terminal connected to the intermediate node, a base terminal connected to the auxiliary node and an emitter terminal connected to the main node; and
an adder circuit for combining the received luminance signal with a signal appearing on the main node.

20. The circuit of claim 19 further comprising a low pass filter coupling the main node to the adder circuit for eliminating high frequency components of the signal appearing on the main node.

21. The circuit of claim 20 further comprising a multiplier coupling the filter to the adder circuit for scaling the signal output from the filter.
